## Europäisches Patentamt

## European Patent Office

## Office européen des brevets

(19)

(11) Numéro de publication: **0 220 967**
**B1**

(12) **FASCICULE DE BREVET EUROPÉEN**

(45) Date de publication du fascicule du brevet:
**12.10.88**

(51) Int. Cl.⁴: **B 65 G 17/32**

(21) Numéro de dépôt: **86400184.7**

(22) Date de dépôt: **29.01.86**

(54) **Convoyeur de récipients.**

(30) Priorité: **28.10.85 FR 8515997**
**17.12.85 FR 8518713**

(43) Date de publication de la demande:
**06.05.87 Bulletin 87/19**

(45) Mention de la délivrance du brevet:
**12.10.88 Bulletin 88/41**

(84) Etats contractants désignés:
**AT BE CH DE GB IT LI NL SE**

(56) Documents cité:
**GB-A-1 303 260**
**US-A-2 243 032**
**US-A-3 587 829**
**US-A-3 590 994**

(73) Titulaire: **E.P. REMY ET CIE, 50 Avenue des Fenots, F-28104 Dreux Cédex (FR)**

(72) Inventeur: **Lemaire, Victor Didier, 14 rue de la Pinède Cherisy, F-28500 Vernouillet (FR)**
Inventeur: **Dronet, Jean- Marc, Neuvy au Houlme (Le Bourg), F-61210 Putanges Pont Ecrepin (FR)**

(74) Mandataire: **Durand, Yves Armand Louis, Cabinet Z. Weinstein 20, Avenue de Friedland, F-75008 Paris (FR)**

EP 0 220 967 B1

LIBER, STOCKHOLM 1988

## Description

La présente invention a pour objet un convoyeur de récipients, tels que par exemple des gobelets.

On connait déjà des machines comprenant un convoyeur de récipients destinés à contenir par exemple une denrée alimentaire quelconque, ces machines permettant le remplissage et l'operculage automatiques des récipients.

Jusqu'à présent, le convoyeur était constitué de deux chaînes sans fin munies de plaques transversales solidaires des deux chaînes et comportant des orifices susceptibles de recevoir et de retenir par leurs bords les gobelets. Ainsi, le convoyeur permettait l'entraînement de rangées successives de gobelets qui passaient devant des postes divers et successifs de traitement situés au-dessus du convoyeur. De tels convoyeurs sont décrits par exempel dans US-A-1 303 260 et US-A-3 587 829.

Comme on le comprend, les plaques transversales avec orifices ne peuvent convenir que pour un diamètre bien déterminé des récipients. Pour traiter des récipients d'une forme ou d'un diamètre différent, il convient bien sûr de changer toutes les plaques transversales pour les remplacer par d'autres plaques comportant des orifices correspondant à la nouvelle forme ou dimension des récipients que l'on veut traiter. Ceci, comme on le comprend, représente un travail considérable et très coûteux, sans parler du fait qu'il faudrait disposer d'autant de jeux de plaques transversales que l'on a des formes de récipients à traiter, ce qui est difficilement envisageable.

Aussi, la présente invention a pour but de remédier aux inconvénients ci-dessus en proposant un nouveau convoyeur de récipients que l'on peut qualifier d'universel en ce qu'il peut s'adapter quasi-instantanément à une grande variété de formes et de dimensions de récipients.

A cet effet, l'invention a pour objet un convoyeur de récipients, tels que par exemple des gobelets, et du type comprenant deux chaînes ou analogues sans fin parallèles munies d'éléments transversaux solidaires des deux chaînes et aptes à recevoir des récipients qui sont ainsi entraînés par les chaînes, caractérisé en ce que les éléments transversaux sont chacun constitués par un ensemble de biellettes articulées entre elles et sur les chaînes pour définir un ou plusieurs parallélogrammes déformables dans lesquels peuvent être insérés des récipients de forme et dimensions quelconques.

Suivant une autre caractéristique de l'invention, le ou les parallélogrammes de chaque élément transversal est ou sont déformables à l'aide de moyens s'étendant suivant sensiblement la direction longitudinale du convoyeur et actionnant au moins l'une des biellettes.

On comprend donc que les parallélogrammes déformables pourront être facilement plus ou moins ouverts de façon à retenir des récipients de forme et dimensions quelconques. On pourra donc passer très facilement du traitement d'une série de récipients ayant une certaine forme au traitement d'une autre série de récipients possédant une autre forme. En outre, quelle que soit la forme, le diamètre ou la dimension des récipients, ceux-ci demeureront toujours parfaitement centrés par rapport aux divers postes de travail situés au dessus du convoyeur

Suivant un exemple de réalisation, les moyens de commande de la déformation des parallélogrammes sont constitués par un rail, une glissière ou tout autre moyen analogue qui est réglable suivant une direction orthogonale à la direction longitudinale du convoyeur et dans lequel roule ou glisse un élément, tel que par exemple un galet solidaire de l'une des biellettes.

On précisera encore ici qu'au moins une partie du rail réglable précité peut être déplaçable par rapport à la partie restante de ce rail, en étant par exemple articulée sur cette partie restante.

Suivant une autre caractéristique de l'invention, on prévoit un deuxième rail, glissière ou analogue fixe s'étendant suivant une direction sensiblement parallèle au rail ou à la glissière réglable précité et coopérant lui aussi avec un élément, tel que par exemple un galet, solidaire d'une biellette.

Un tel deuxième rail constitue avantageusement un pivot pour les parallélogrammes, de sorte que leur déformation provoquée lors du déplacement du rail réglable précité n'aura aucune incidence sur les chaînes du convoyeur.

Selon encore une autre caractéristique de l'invention, les parallélogrammes déformables constituant chaque élément transversal sont formés par quatre biellettes articulées réalisant un premier parallélogramme comportant deux côtés opposés articulés respectivement sur les deux chaînes, tandis que d'autres biellettes sont articulées entre les deux autres côtés opposés du premier parallélogramme pour ainsi définir une pluralité de parallélogrammes susceptibles de recevoir chacun un récipient.

On précisera encore ici que le galet coopérant avec le rail réglable est monté sur l'un des deux autres côtés opposés précités du premier parallélogramme, de préférence à l'extrémité d'un prolongement de ce côté.

Quant au galet coopérant avec le rail fixe, il est monté sur une biellette articulée reliant l'extrémité du prolongement précité à un prolongement du deuxième autre côté opposé du premier parallélogramme.

Suivant encore une autre caractéristique de l'invention, le convoyeur est équipé de supports verticalement mobiles situés en dessous du brin supérieur du convoyeur et susceptibles de recevoir les récipients et de traverser les parallélogrammes déformables en position ouverte.

Ces supports peuvent par exemple être situés au droit d'une tête de thermoscellage fixe située au-dessus du brin supérieur du convoyeur et contre laquelle s'appliquent les supports pour souder un opercule sur l'ouverture des récipients.

On sera ainsi certain d'obtenir un soudage parfait des opercules sur les bords des gobelets.

Suivant un autre mode de réalisation du convoyeur selon cette invention, l'actionnement du ou des parallèlogrammes déformables est réalisé par au moins une pièce active reliant les prolongements de deux côtés opposés du ou des parallèlogrammes.

Cette pièce active peut être constituée par un moyen de rappel du ou des parallèlogrammes en position fermée, tel que par exemple un ressort ou un simple lien élastiques, tandis que des moyens sont prévus pour agir sur le ou les parallèlogrammes à l'encontre de la force du moyen de rappel afin d'ouvrir ce ou ces parallèlogrammes.

Les moyens pour agir sur les parallèlogrammes sont consitués par un galet prévu à l'extrémité de l'un des prolongements précités et coopérant avec une rampe ou analogue déplaçable de préférence perpendiculairement au plan du ou des parallèlogrammes.

Suivant un autre mode de réalisation, la pièce active précitées est constituée par une pièce en forme de T dont la branche horizontale est articulée par ses deux extrémités sur les prolongements précités et dont la branche verticale est retenue sur une chaîne d'entraînement parallèle aux deux chaînes du convoyeur et réglable par rapport à ces deux chaînes.

On précisera encore ici que la branche verticale du T constitue une pince comportant un premier bras fixe solidaire de la branche horizontale du T et un deuxième bras articulé sur cette branche et sollicité par un ressort en direction du premier bras pour pouvoir saisir un doigt ou analogue solidaire de la chaîne d'entraînement précitée.

On précisera encore qu'un moyen de poussée, tel que par exemple un vérin, sur la pièce en T précitée est prévu pour provoquer l'ouverture de la pince et donc du ou des parallèlogrammes déformables.

Mais d'autres avantages et caractéristiques de l'invention apparaîtront mieux dans la description détaillée qui suit et se réfère aux dessins annexés, donnés uniquement à titre d'exemple et dans lesquels:

la figure 1 est une vue schématique en plan et de dessus d'un convoyeur selon l'invention;

la figure 2 est une vue agrandie et en coupe du convoyeur suivant sensiblement la ligne II-II de la figure 2, cette coupe illustrant schématiquement le poste de thermoscellage;

la figure 3 est une vue partielle et de dessus du convoyeur correspondant à la partie repérée III sur la figure 1, cette vue illustrant un autre système de commande des parallèlogrammmes articulés,

la figure 4 est une vue en bout du convoyeur suivant la flèche IV de la figure 3 et;

les figures 5 à 8 illustrent schématiquement et respectivement en vue du dessus différentes déformations d'un parallèlogramme articulé pour permettre la retenue de récipients ayant des formes ou dimensions variées.

la figure 9 est une vue de dessus schématique et très partielle du convoyeur montrant une autre réalisation des moyens de commande ou d'actionnement des parallèlogrammes déformables qui sont ici montrés en position fermée sur les récipients;

la figure 10 est une vue identique à la figure 9 mais montrant les parallèlogrammes déformables en position ouverte ou de relâchement des récipients;

la figure 12 est une vue suivant la flèche III de la figure 10, montrant la commande d'ouverture des parallèlogrammes;

la figure 12 est une vue de dessus partielle et très schématique du convoyeur équipé d'un autre moyen de commande des parallèlogrammes articulés;

la figure 13 illustre, en vue de dessus, une construction particulière de ce moyen de commande des parallèlogrammes déformables qui sont ici représentés en position fermée; et

la figure 14 représente, également en vue de dessus, ladite construction particulière après actionnement par un moyen de poussée pour ouvrir les parallèlogrammes.

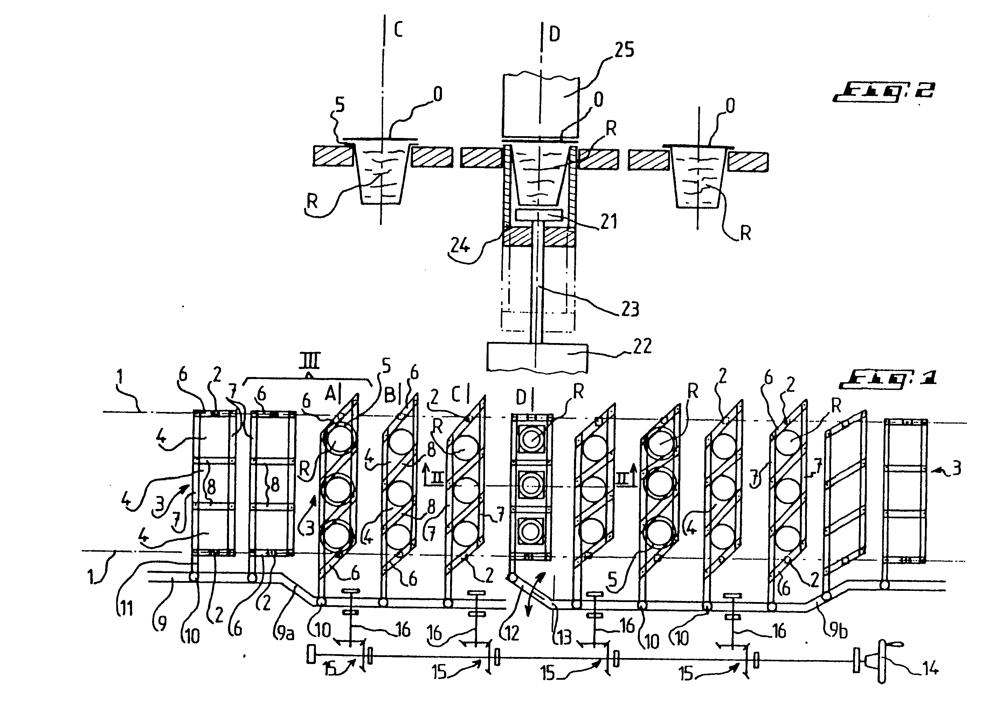

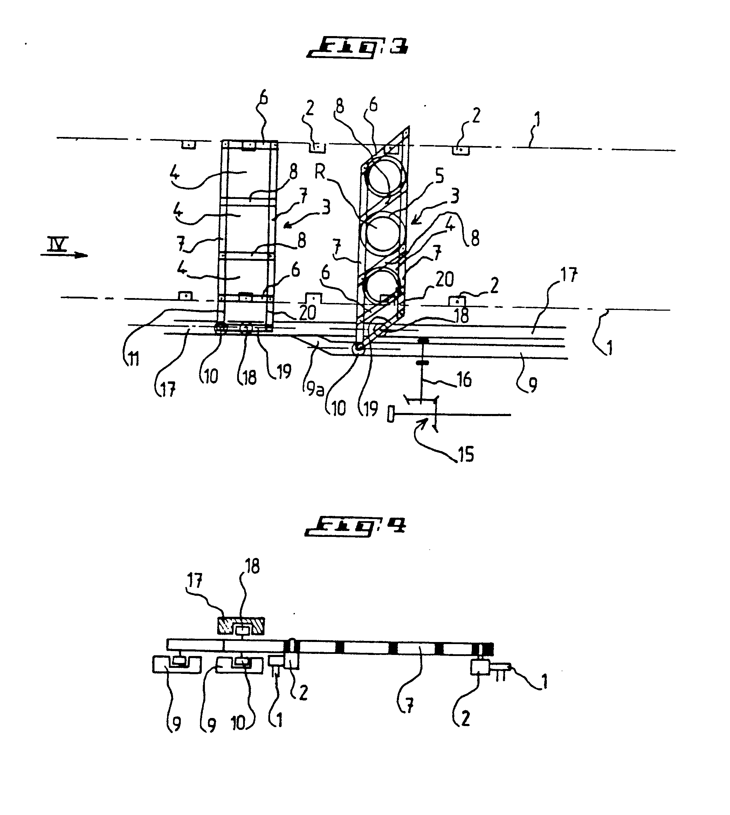

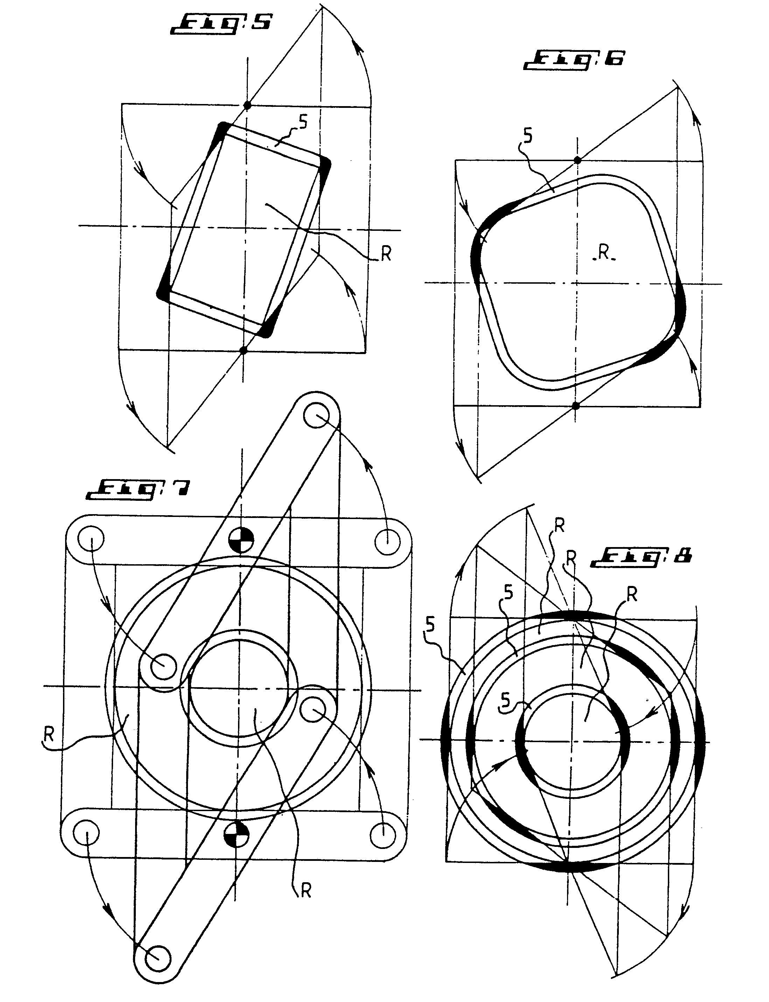

Suivant un exemple de réalisation, et en se reportant notamment aux figures 1 et 3 un convoyeur conforme à l'invention comprend essentiellement deux chaînes sans fin 1 munies de pivots 2 sur lesquels sont montés des éléments transversaux 3 constitués chacun par un ensemble de biellettes articulées entre elles et sur les pivots 2 des chaînes 1 de façon à définir un ou plusieurs parallèlogrammes déformables 4 susceptibles de retenir chacun un récipient ou gobelet R.

Chaque récipient R prend appui par son rebord 5 sur les biellettes d'un parallèlogramme déformable 4.

Suivant l'exemple représenté sur les figures 1 et 3, les éléments transversaux 3 comportent trois parallèlogrammes articulés 4 formés par un premier parallèlogramme comportant deux côtés opposés 6 articulés respectivement sur les pivots 2 des deux chaînes 1 et deux autres côtés opposés 7 entre lesquels sont articulées deux biellettes 8.

Comme cela apparait sur la figure 1, la commande de la déformation des parallèlogrammes articulés 4 de chaque élément transversal 3 est assurée, suivant un exemple de réalisation, par un rail 9 qui s'étend suivant la direction longitudinale du convoyeur et dans lequel roule un galet 10 monté à l'extrémité d'un prolongement 11 de l'un des côtés 7 du parallèlogramme défini par les deux côtés 7 et les deux côtés 6 articulés en 2 sur les chaînes 1.

Le rail 9 comporte des coudes tels que 9a, 9b pour permettre la déformation des parallèlogrammes articulés 4 lorsque les chaînes 1 sont entraînées, ces coudes permettant soit la fermeture des parallèlogrammes 4 pour permettre la retenue des récipients R, soit le relâchement de ces récipients, comme on le décrira plus loin à propos du fonctionnement.

Le rail 9 peut comporter une ou plusieurs parties telles que 12 déplaçables par rapport à la partie restante dudit rail 9, en étant par exemple articulées en 13 sur cette partie restante.

Le rail 9 est réglable suivant une direction perpendiculaire à la direction longitudinale du convoyeur défini par les chaînes 1 et cela à l'aide de moyens quelconques, manuels ou automatiques, lesquels moyens peuvent être constitués, comme cela est représenté sur la figure 1, par une manivelle 14 qui, par l'intermédiaire de pignons de renvoi 15 et d'une liaison 16 au rail 9 permet le déplacement de celui-ci suivant la direction indiquée plus haut.

A ce rail 9 peut être associé un autre rail 17 qui est fixe et, rectiligne, ce rail 17 étant visible sur la figure 3. Dans ce rail 17 roule un galet 18 qui est monté sur une biellette 19 articulée d'une part sur l'extrémité du prolongement 11 cité précédemment, et sur l'extrémité d'un autre prolongement 10 de l'autre côté 7 du premier parallèlogramme défini par les côtés 7 et 6. En d'autres termes, la biellette 19, les prolongements 11 et 10 et l'une des biellettes 6 définissent un parallèlogramme articulé qui ne reçoit pas de récipients R, mais qui sert à commander la déformation des parallèlogrammes 4.

On décrira maintenant le fonctionnement du convoyeur qui peut par exemple être utilisé pour remplir et obturer automatiquement des gobelets R destinés à contenir une denrée alimentaire.

En allant de la gauche vers la droite de la figure 1 on voit que les parallèlogrammes articulés 4 des éléments transversaux 3 sont ouverts, puis déformés après franchissement du coude 9a de façon à recevoir des gobelets R provenant d'un poste A d'alimentation en gobelets situé au-dessus du convoyeur. Bien entendu, le degré de déformation des parallèlogrammes 4 sera fonction de la position du rail 9 qui est réglée en fonction de la forme des récipients R à traiter.

Puis les gobelets parviennent au poste B où ils seront remplis, et ensuite au poste C qui assure la dépose d'un opercule O visible sur la figure 2.

Ensuite, les gobelets R parviennent au poste D qui est un poste de thermoscellage. En parvenant à ce poste, et comme on le voit sur la figure 2, les gobelets R reposent par leur fond sur un plateau 21 qui est solidaire du bâti 22 de la machine par l'intermédiaire d'une tige ou analogue 23. Il est à noter qu'au poste C, la partie 12 du rail 9 a été déplacée, ce qui commande l'ouverture des parallèlogrammes articulés 4, et donc la dépose des gobelets sur le plateau 21. Un support cylindrique formant contre-électrode 24 est alors actionné par tout moyen approprié, tel que par exemple un vérin, depuis la position visible en traits pointillés, jusqu'à la position visible en traits pleins sur la figure 2 et cela par coulissement le long de la tige 23 supportant le plateau 21. Le support cylindrique 24 traverse le parallèlogramme articulé 4 qui a été préalablement ouvert et soulève le récipient R par son bord 5 pour venir l'appliquer contre une tête de thermoscellage 25 qui est fixe. L'opercule O est ainsi correctement soudé sur le bord 5 des récipients R. Ensuite, le support cylindrique 24 est descendu, tandis que les parallèlogrammes articulés 4 sont déformés de façon à ce que le bord 5 des récipients prenne à nouveau appui sur les biellettes 6, 7 et 8 définissant les parallèlogrammes articulés 4. Enfin, les rangées de gobelets R sont acheminées plus loin jusqu'à ce que les parallèlogrammes articulés 4 soient à nouveau ouverts après passage sur l'autre coude 9b du rail 9, ce qui permet la libération des gobelets et leur évacuation du convoyeur par tout moyen approprié de préhension ou d'éjection.

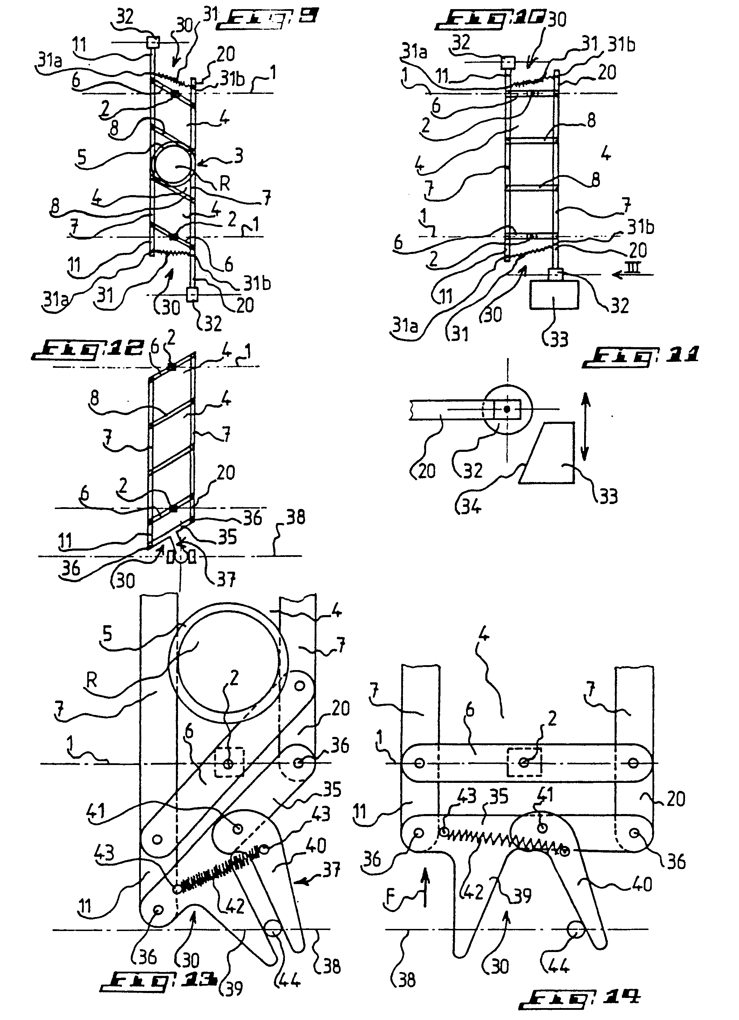

En se reportant aux figures 5 à 8, on voit qu'un convoyeur selon l'invention peut assurer le transport et le maintien de récipients R de forme quelconque, et cela tout en conservant un centrage parfait par rapport aux divers postes situés au-dessus du convoyeur.

C'est ainsi que la figure 5 montre un récipient R à ouverture rectangulaire, que la figure 6 montre un récipient R à ouverture sensiblement carrée , et que les figures 7 et 8 montrent des récipients R de forme circulaire et de diamètres différents pouvant être supportés par le convoyeur de l'invention, à condition de choisir le degré de déformation approprié des parallèlogrammes 4, ce qui peut être facilement obtenu en commandant le déplacement du rail 9, comme cela a été expliqué précédemment. A cet égard, on remarquera que le galet 18 roulant dans le rail fixe 17 (figure 2), sert avantageusement de point de pivotement positif évitant toute traction éventuelle sur les chaînes 1 lorsque le galet 10 franchit un coude 11 du rail 9 et exerce par conséquent une poussée ou une traction sur les biellettes articulées 6, 7 et 8 de chaque élément transversal 3 du convoyeur.

On se reportera maintenant aux figures 9 à 14 qui montrent d'autres moyens particulièrement simples et fiables de commande de parallèlogrammes articulés.

Comme on le voit sur les figures 9, 10 et 12 à 14, une pièce active 30 relie les prolongements 11, 20 des deux côtés opposés 7 des parallèlogrammes déformables 4, cette pièce permettant l'ouverture et la fermeture desdits parallèlogrammes.

Suivant la réalisation visible sur les figures 9 et 10, la pièce active 30 est constituée par un ressort 31 rappelant automatiquement les parallèlogrammes 4 en position fermée sur les récipients R, comme cela est bien visible sur la figure 9. A la place du ressort 31, on pourrait très bien prévoir, sans sortir du cadre de l'invention, un simple lien élastique, en caoutchouc par exemple, fixé par ses extrémités entre les prolongements 11 et 20. On notera ici que le ressort ou lien élastique 31 peut être prévu à l'une seulement des extrémités de la ligne de parallèlogrammes 4 ou bien aux deux extrémités de cette ligne, comme on le voit sur les figures 9 et 10. On remarquera ici que les extrémités d'accrochage 31a et 31b du ressort ou lien élastique 31 sur les prolongements 11 et 20 sont respectivement décalées ou différemment espacées par rapport aux articulations de la biellette 6 sur les côtés 7 de façon à provoquer l'effet de rappel en position fermée sur les parallèlogrammes 4.

A l'extrémité du prolongement 20 situé d'un côté des chaînes 1, et éventuellement à l'extrémité du prolongement 11 situé de l'autre côté des chaînes 1, on prévoit un galet 32 qui peut coopérer avec une rampe ou came 33 visible sur les figures 10 et 11. Cette came 33 est déplaçable perpendiculairement au plan des parallèlogrammes déformables 4 et comporte par exemple un plan incliné 34 qui, coopérant avec le galet 32, pousse l'un des côtés 7 à l'encontre de la force du rappel du ressort ou lien élastique 31. Ainsi, comme on le comprend, les parallèlogrammes 4 seront ouverts et relâcheront les récipients R.

Suivant la variante visible sur la figure 12, la pièce active 30 permettant l'actionnement des parallèlogrammes déformables 4 est constituée par une pièce en forme de T dont la branche horizontale 35 est articulée par ses extrémités 36 sur les prolongements 11 et 20, tandis que la branche verticale 37 du T est retenue sur une chaîne d'entraînement 38 qui est parallèle aux chaînes 1 du convoyeur proprement dit et qui est réglable par rapport à ces deux chaînes. On comprend donc que les parallèlogrammes articulés 4 pourront être ouverts ou fermés en fonction de la position de retenue de cette pièce sur la chaîne 38.

Mais on se reportera maintenant aux figures 13 et 14 pour décrire une réalisation préférée de cette pièce en T.

Sur ces figures, on voit que la branche verticale 37 de la pièce en T forme une pince. Cette pince comporte un premier bras 39 intégral à la branche horizontale 35 et un deuxième bras 40 articulé en 41 sur la branche 35 et rappelé en direction du premier bras 39 par un ressort 42 fixé par ses deux extrémités 43 sur le deuxième bras 40 d'une part et sur la branche horizontale 35 de la pièce en T.

La pince formée par les deux bras 39, 40 saisit un doigt 44 solidaire de la chaîne 38.

Ainsi, comme on le voit sur la figure 13, la position de la chaîne 38 par rapport aux chaînes 1 est telle que la pièce en T 37 est inclinée, ce qui correspond à une position de fermeture des parallèlogrammes articulés 4 qui peuvent ainsi retenir par son bord 5 un récipient R.

Pour relâcher le récipient R, comme on le voit sur la figure 14, il suffit de faire intervenir un moyen de poussée matérialisé par la flèche F et constitué par un vérin par exemple, lequel moyen, en agissant sur la branche horizontale 35, assure l'ouverture de la pince et des parallèlogrammes articulés 4 par le fait que le bras 40 reste en appui sur le doigt 44 de la chaîne 38.

On a donc réalisé suivant l'invention un convoyeur à chaîne avec éléments transversaux constitués par des parallèlogrammes articulés qui peuvent recevoir des récipients de formes quelconques tout en les maintenant parfaitement centrée, et qui permettent de passer très facilement du traitement de récipients d'une certaine forme au traitement de récipients d'une autre forme.

Bien entendu, l'invention n'est nullement limitée au mode de réalisation décrit et illustré qui n'a été donné qu'à titre d'exemple.

C'est ainsi que le nombre des parallèlogrammes articulés de chaque élément transversal du convoyeur, ainsi que les moyens pour commander la déformation des parallèlogrammes articulés peuvent être quelconques sans sortir du cadre de l'invention.

**Revendications**

1. Convoyeur de réciptients, tels que par exemple des gobelets, et du type comprenant deux chaînes (1) ou analogues sans fin parallèles d'élément transversaux (3) solidaires des deux chaînes et aptes à recevoir des réciptients (R) qui sont ainsi entraînés par les chaînes, caractérisé en ce que les éléments transversaux (3) sont chacun constitués par un ensemble de biellettes (6, 7, 8) articulées entre elles et sur les chaînes (1) pour définir un ou plusieurs parallèlogrammes déformables (4) dans lesquels peuvent être insérés des récipients (R) de forme et dimension quelconques.

2. Convoyeur selon la revendication 1, caractérisé en ce que le ou les parallèlogrammes (4) de chaque élément transversal (3) est ou sont déformables à l'aide de moyens s'étendant suivant sensiblement la direction longitudinale du convoyeur et actionnant au moins l'une des biellettes.

3. Convoyeur selon la revendication 1 ou 2, caractérisé en ce que les moyens précités sont constitués par un rail, une glissière ou analogue (9) qui est réglable suivant une direction orthogonale à la direction longitudinale du convoyeur et dans lequel roule ou glisse un élément, tel que par exemple un galet (10) solidaire de l'une (7) des biellettes.

4. Convoyeur selon la revendication 3, caractérisé en ce qu'au moins une partie (12) du rail réglable précité (9) est déplaçable par rapport à la partie restante du rail, en étant par exemple articulée (13) sur cette partie restante.

5. Convoyeur selon l'une des revendications 1 à 4, caractérisé par un deuxième rail, glissière ou analogue fixe (17) s'étendant suivant une direction sensiblement parallèle au rail ou à la glissière réglable précité (9) et coopérant lui aussi avec un élément, tel que par exemple un galet (18), solidaire d'une biellette (19).

6. Convoyeur selon l'une des revendications précédentes, caractérisé en ce que les parallèlogrammes déformables constituant chaque élément transversal (3) sont formés par quatre biellettes articulées (6, 7) réalisant un premier parallèlogramme comportant deux côtés opposés (6) articulés respectivement sur les deux chaînes (1) tandis que d'autres biellettes (8) sont articulées entre les deux autres côtés opposés (7) du premier parallèlogramme pour ainsi définir une pluralité de parallèlogrammes (4) susceptibles de recevoir chacun un récipient (R).

7. Convoyeur selon l'une des revendications précédentes, caractérisé en ce que le galet (10) coopérant avec le rail réglable (9) est monté sur l'un des deux autres côtés opposés précités (7) du premier parallèlogramme, et de préférence à l'extrémité d'un prolongement (11) de ce côté.

8. Convoyeur selon l'une des revendications précédentes, caractérisé en ce que le galet (18) coopérant avec le rail fixe (17) est monté sur une biellette articulée (19) reliant l'extrémité du prolongement précité (11) à un prolongement (10) du deuxième autre côté opposé (7) du premier parallèlogramme.

9. Convoyeur selon l'une des revendications précédentes, caractérisé par des supports (14) verticalement mobiles situés en dessous du brin supérieur du convoyeur et susceptibles de recevoir les récipients (R) et de traverser les parallèlogrammes déformables (4) en position ouverte.

10. Convoyeur selon la revendication 9, caractérisé en ce que les supports (24) sont situés au droit d'une tête de thermoscellage fixe (25) située au-dessus du brin supérieur du convoyeur et contre laquelle s'appliquent lesdits supports pour souder un opercule (O) sur l'ouverture des récipients (R).

11. Convoyeur selon la revendication 1 ou 6, caractérisé en ce que l'actionnement du ou des parallèlogrammes déformables (4) est réalisé par au moins une pièce active (30) reliant les prolongements (11, 20) de deux côtés opposés (7) du ou des parallèlogrammes.

12. Convoyeur selon la revendication 11, caractérisé en ce que la pièce active précitée est constituée par un moyen de rappel du ou des parallèlogrammes (4) en position fermée, tel que par exemple un ressort ou un lien élastique (31), tandis que des moyens sont prévus pour agir sur le ou les parallèlogrammes (4) à l'encontre de la force du moyen de rappel afin d'ouvrir ce ou ces parallèlogrammes.

13. Convoyeur selon la revendication 12, caractérisé en ce que les moyens précités sont constitués par un galet (32) prévu à l'extrémité d'au moins l'un des prolongements précités (11, 20) et coopérant avec une rampe ou analogue (33) déplaçable de préférence perpendiculairement au plan du ou des parallèlogrammes (4).

14. Convoyeur selon la revendication 11, caractérisé en ce que la pièce active précitée est constituée par une pièce en forme de T, dont la branche horizontale (35) est articulée par ses deux extrémités (36) sur les prolongements précités (11, 20) et dont la branche verticale (37) est retenue sur une chaîne d'entraînement (38) parallèle aux deux chaînes (1) du convoyeur et réglable par rapport à ces deux chaînes.

15. Convoyeur selon la revendication 14, caractérisé en ce que la branche verticale (37) du T constitue une pince comportant un premier bras fixe (39) solidaire de la branche horizontale (35) du T et un deuxième bras (40) articulé sur cette branche et sollicité par ressort (42) en direction du premier bras (39) pour pouvoir saisir un doigt ou analogue (44) solidaire de la chaîne d'entraînement précitée (38).

16. Convoyeur selon la revendication 14 ou 15, caractérisé par un moyen de poussée, tel que par exemple un vérin, sur la pièce en T précitée pour provoquer l'ouverture de la pince et du ou des parallèlogrammes déformables (4).

**Patentansprüche**

1. Förderer für Behälter wie z. B. Becher, derjenigen Gattung, die zwei parallele endlose Ketten (1) oder dergleichen umfaßt, welche mit mit den beiden Ketten fest verbundenen Querelementen (3), die fähig sind, Behälter (R), die somit von den Ketten mitgenommen werden, aufzunehmen, versehen sind, dadurch gekennzeichnet, daß die Querelemente (3) jeweils durch eine Gesamtheit von miteinander und an den Ketten (1) angelenkten Stäben (6, 7, 8) bestehen, um ein verformbares Parallelogramm bzw. mehrere verformbare Parallelogramme (4) zu bilden, in welches bzw. welchen Behälter (R) irgendwelcher Gestalt und Abmessung eingefügt werden können.

2. Förderer nach Anspruch 1, dadurch gekennzeichnet, daß das Parallelogramm bzw. die Parallelogramme (4) jedes Querelementes (3) mit Hilfe von sich im wesentlichen in der Längsrichtung des Förderers erstreckenden und wenigstens einen der Stäbe betätigenden Mitteln verformbar ist bzw. sind.

3. Förderer gemäß Anspruch 1 oder 2, dadurch gekennzeichnet, daß die vorgenannten Mittel aus einer Schiene, einer Gleitführung oder dergleichen (9) bestehen, die in einer zu der Längsrichtung des Förderers senkrechten Richtung einstellbar ist und in welcher ein Element wie z. B. eine mit einem (7) der Stäben befestigten Rolle rollt oder gleitet.

4. Förderer nach Anspruch 3, dadurch gekennzeichnet, daß wenigstens ein Teil (12) der vorgenannten einstellbaren Schiene (9) in Bezug aus den übrigen Teil der Schiene verschiebbar ist, wobei er z. B. an diesem übrigen Teil angelenkt (13) ist.

5. Förderer nach einem der Ansprüche 1 bis 4, gekennzeichnet durch eine ortsfeste zweite Schiene, Gleitführung oder dergleichen (17), die sich in einer im wesentlichen mit der vorgenannten einstellbaren Schiene bzw. Gleitführung (9) parallelen Richtung erstreckt und die ebenfalls mit einem Element wie z. B. einer an einem Stab (19) befestigten Rolle (18) zusammenwirkt.

6. Förderer nach einem der vorangehenden Ansprüche, dadurch gekennzeichnet, daß die jedes Querelement (3) bildende verformbare Parallelogramme durch vier angelenkte Stäbe (6, 7) gebildet werden, welche ein erstes Parallelogramm mit zwei entgegengesetzten jeweils an den beiden Ketten (1) angelenkten Seiten (6) bilden, während andere Stäbe (8) zwischen den beiden anderen entgegengesetzten Seiten (7) des ersten Parallelogramms angelenkt sind, um somit eine Vielzahl von jeweils einen Behälter (R) aufnahmefähigen Parallelogrammen (4) zu bilden.

7. Förderer nach einem der vorangehenden Ansprüche, dadurch gekennzeichnet, daß die mit der einstellbaren Schiene (9) zusammenwirkende Rolle (10) an einem der beiden anderen vorgenannten entgegengesetzten Seiten (7) des ersten Parallelogramms und vorzugsweise an dem Ende einer Verlängerung (11) dieser Seite angeordnet ist.

8. Förderer nach einem der vorangehenden Ansprüche, dadurch gekennzeichnet, daß die mit der ortsfesten Schiene (17) zusammenwirkende Rolle (18) an einem, das Ende des vorgenannten Fortsatzes (11) mit einem Fortsatz (20) der zweiten anderen entgegengesetzten Seite (7) des ersten Parallelogramms verbindenden angelenkten Stab (19) angeordnet ist.

9. Förderer nach einem der vorangehenden Ansprüche, gekennzeichnet durch lotrecht bewegliche, unterhalb des oberen Trumms des Förderers gelegene Halterungen (24), die fähig sind, die Behälter (R) aufzunehmen und die verformbaren Parallelogramme (4) in offener Stellung zu durchqueren.

10. Förderer nach Anspruch 9, dadurch gekennzeichnet, daß die Halterungen (24) unterhalb eines ortsfesten, oberhalb des oberen Trumms des Förderers gelegenen Heißsiegelkopf (25) liegen, gegen welchen die besagten Halterungen anliegen, um einen Verschluß (O) auf die Öffnung des Behälters (R) anzuschweißen.

11. Förderer nach Anspruch 1 oder 6, dadurch gekennzeichnet, daß die Betätigung des verformbaren Parallelogramms bzw. der verformbaren Parallelogramme (4) durch wenigstens ein die Verlängerungen (11, 20) von zwei entgegengesetzten Seiten (7) des Parallelogramms bzw. der Parallelogramme verbindendes wirksames Glied (30) erfolgt.

12. Förderer nach Anspruch 11, dadurch gekennzeichnet, daß das vorgenannte Wirkglied aus einem Mittel zur Rückführung des Parallelogramms bzw. der Parallelogramme (4) in die geschlossene Stellung, wie z. B. einer Feder oder einem elastischen Verbindungsteil (31) besteht, während Mittel vorgesehen sind, um auf das Parallelogramm bzw. die Parallelogramme (4) entgegen der Kraft des Rückführungsmittels einzuwirken, um dieses Parallelogramm bzw. diese Parallelogramme zu öffnen.

13. Förderer nach Anspruch 12, dadurch gekennzeichnet, daß die vorgenannten Mittel aus einer an dem Ende von mindestens einer der vorgenannten Verlängerungen (11, 20) vorgesehenen und mit einer vorzugsweise senkrecht zu der Ebene des Parallelogramms bzw. der Parallelogramme (4) verschiebbaren Rampe oder dergleichen (33) zusammenwirkenden Rolle (32) bestehen.

14. Förderer nach Anspruch 11, dadurch gekennzeichnet, daß das vorgenannte Wirkglied aus einem T-förmigen Stück besteht, dessen waagerechter Schenkel (35) mit seinen beiden Enden (36) an den vorgenannten Fortsätzen (11, 20) angelenkt ist und dessen senkrechter Schenkel (37) an einer zu den beiden Ketten (1) des Förderers parallelen und gegenüber diesen beiden Ketten einstellbaren Mitnehmerkette (38) festgehalten ist.

15. Förderer nach Anspruch 14, dadurch gekennzeichnet, daß der senkrechte Schenkel (37) des T's eine Zange bildet, die einen ersten ortsfesten mit dem waagerechten Schenkel (35) des T's fest verbundenen Arm (39) und einen zweiten an diesem Schenkel angelenkten und in Richtung auf den ersten Arm (39) durch eine Feder (42) beaufschlagten Arm (40) aufweist, um einen mit der vorgenannten Mitnehmerkette (38) fest verbundenen Finger oder dergleichen (44) ergreifen zu können.

16. Förderer nach Anspruch 14 oder 15, gekennzeichnet durch ein auf das vorgenannte T-förmige Stück tätiges Schubmittel, wie z. B. einen Kraftzylinder, um die Öffnung der Zange und des verformbaren Parallelogramms bzw. der verformbaren Parallelogramme (4) zu veranlassen.

**Claims**

1. Conveyor for containers such as for example cups, of the type including two parallel endless chains (1) or the like provided with transverse members (3) connected to both chains and adapted to receive containers (R) which are thus carried by the chains, characterized in that the transverse members (3) are each constituted by an assembly of links (6, 7, 8) hingedly connected to one another and to the chains (1) to constitute one or more deformable parallelogram linkages (4) into which containers (R) of any desired shape and dimension can be inserted.

2. Conveyor according to claim 1, characterized in that the parallelogram linkage or linkages (4) of each transverse member (3) is or are deformable by means extending in substantially the longitudinal direction of the conveyor and actuating at least one of the said links.

3. Conveyor according to claim 1 or 2, characterized in that the said means are constituted by a rail, a slide guide or the like (9) which is adjustable in a perpendicular direction to the longitudinal direction of the conveyor and in which a member such as for example a roller (10) solid with one (7) of the links is adapted to roll or slide.

4. Conveyor according to claim 3, characterized in that at least a portion (12) of the said adjustable rail (9) is displaceable with respect to the remaining portion of the rail, e.g. by being hingedly connected (13) to the said remaining portion.

5. Conveyor according to one of claims 1 to 4, characterized by a second, stationary rail, slide guide or the like (17) extending in a substantially parallel relationship to the said adjustable rail or slide guide (9) and also co-operating with a member, such as for example a roller (18), solid with a link (19).

6. Conveyor according to one of the preceding claims, characterized in that the parallelogram linkages constituting each transverse member (3) consist of four hinged links (6, 7) constituting a first parallelogram linkage including two opposite sides (6) hingedly connected respectively to the two chains (1), whereas other links (8) are hingedly connected between the two other opposite sides (7) of the first parallelogram linkage to thus constitute a plurality of parallelogram linkages (4) each adapted to receive a container (R).

7. Conveyor according to one of the preceding claims, characterized in that the roller (10) co-operating with the adjustable rail (9) is arranged on one of the said two other opposite sides (7) of the first parallelogram linkage, preferably at the end of an extension (11) of this side.

8. Conveyor according to one of the preceding claims, characterized in that the roller (18) co-operating with the stationary rail (17) is provided on a hinged link (19) connecting the end of the said extension (11) to an extension (20) of the second other opposite side (7) of the first parallelogram linkage.

9. Conveyor according to one of the preceding claims, characterized by vertically movable supports (24) located below the upper side of the conveyor and adapted to receive the containers (R) and to pass through the deformable parallelogram linkages (4) in open position.

10. Conveyor according to claim 9, characterized in that the supports (24) are loacted straight below a stationary heat-sealing head (25) located above the upper side of the conveyor and to which the said supports are adapted to be applied to weld a cover (O) on the opening of the containers (R).

11. Conveyor according to claim 1 or 6, characterized in that the actuation of the deformable parallelogram linkage or linkages (4) is performed by at least one active member (30) interconnecting the extensions (11, 20) of two opposite sides (7) of the said linkage or linkages.

12. Conveyor according to claim 11, characterized in that the said active member consists of a means for returning the linkage or linkages (4) to closed position, such as for example a spring or a resilient connection (31), whereas means are provided to act on the said linkage or linkages (4) against the force of the said return means to open the said linkage or linkages.

13. Conveyor according to claim 12, characterized in that the said means consist of a roller (32) provided at the end of at least one of the said extensions (11, 20) and co-operating with a cam or the like (33) displaceable preferably in perpendicular relationship to the plane of the said linkage or linkages (4).

14. Conveyor according to claim 11, characterized in that the said active member consists of a T-shaped member whose horizontal portion (35) is hingedly connected at its two ends (36) to the said extensions (11, 20) and whose vertical portion (37) is retained on a driving chain (38) parallel to the two conveyor chains (1) and adjustable with respect to these two chains.

15. Conveyor according to claim 14, characterized in that the vertical portion (37) of the said T-shaped member constitutes pincer means including a first, stationary leg (39) solid with the horizontal portion (35) of the T-shaped member and a second leg (40) hingedly connected to this portion (35) and biased by a spring (42) towards the first leg (39) to thus seize a finger or the like (44) solid with the said driving chain (38).

16. Conveyor according to claim 14 or 15, characterized by push means, such as for example a fluid-operated actuator, adapted to act on the said T-shaped member to cause the opening of the said pincers and of the deformable parallelogram linkage or linkages (4).

_Fig. 2_

_Fig. 1_

0 220 967

Fig. 3

Fig. 4

**Fig. 5**

**Fig. 6**

**Fig. 7**

**Fig. 8**

FIG 9

FIG 10

FIG 11

FIG 12

FIG 13

FIG 14